(19) **Europäisches Patentamt / European Patent Office / Office européen des brevets**

(11) **EP 2 180 688 A1**

(12) **EUROPEAN PATENT APPLICATION**

(43) Date of publication:
**28.04.2010 Bulletin 2010/17**

(51) Int Cl.:
***H04N 1/405*** (2006.01)

(21) Application number: **09173647.0**

(22) Date of filing: **21.10.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **21.10.2008 JP 2008270512**

(71) Applicant: **Sony Corporation Tokyo (JP)**

(72) Inventor: **Tsukamoto, Makoto Tokyo (JP)**

(74) Representative: **Thévenet, Jean-Bruno et al Cabinet Beau de Loménie 158, rue de l'Université 75340 Paris Cédex 07 (FR)**

(54) **Image processing apparatus, image processing method, and program**

(57) An image processing apparatus includes a gradation converting unit (11) configured to simultaneously perform space-direction $\Delta\Sigma$ modulation and time-direction $\Delta\Sigma$ modulation on an image, thereby converting a gradation level of the image.

## FIG. 13

EP 2 180 688 A1

**Description**

BACKGROUND OF THE INVENTION

1. Field of the Invention

The present invention relates to an image processing apparatus, an image processing method, and a program. Particularly, the present invention relates to an image processing apparatus, an image processing method, and a program that enable an improvement in perceived quality of a gradation-converted image.

2. Description of the Related Art

For example, in a case where an image of a large number of bits, such as an image in which each of RGB (Red, Green, and Blue) values is 8 bits, is to be displayed on a display of a small number of bits, such as an LCD (Liquid Crystal Display) capable of displaying an image in which each of RGB values is 6 bits, it is necessary to perform gradation conversion for converting the gradation level of the image.

An example of a method for performing the gradation conversion is FRC (Frame Rate Control).

In the FRC, the frame rate of images to be displayed on a display is adjusted to match the display rate of the display, the display rate being four times higher than the frame rate, for example, and then the images are displayed on the display.

That is, for example, assume that 8-bit images are to be displayed on a 6-bit LCD. When the focus is put on a pixel in a frame of the 8-bit images, the frame is called a target frame and the pixel is called a target pixel.

Furthermore, assume that the pixel value of the target pixel is 127. Also, assume that the frame rate (or the field rate) of the 8-bit images is 60 Hz and that the display rate of the 6-bit LCD is four times the frame rate of the 8-bit images, that is, 240 Hz.

In the FRC, the frame rate of the images is controlled to be four times so that the frame rate matches the display rate of the display, and then images having a frame rate that has been controlled are displayed.

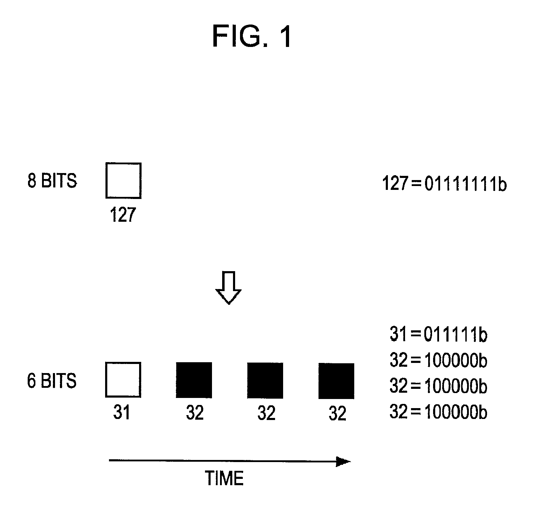

The FRC is described with reference to Fig. 1.

A value 127 (= 01111111b), which is an 8-bit pixel value of the target pixel, can be expressed by an expression 127 = (124+128+128+128)/4 = 31+32+32+32, as illustrated in Fig. 1.

On the right side of the expression 127 = (124+128+128+128)/4, 124 is expressed by 01111100b in a binary number, whereas 128 is expressed by 10000000b in a binary number, and thus both of the values are 8-bit values. Here, b represents that the preceding value is a binary number.

When the frame rate of images is multiplied by n so that the frame rate matches the display rate of a display, n is called "control multiple".

When 124 (= 01111100b) is divided by 4 (= $2^2$) as a control multiple, 31 (= 011111b) is obtained. When 128 (= 10000000b) is divided by 4 as a control multiple, 32 (= 100000b) is obtained. Both of the values are 6-bit values.

A value 127, which is an 8-bit pixel value of the target pixel, can be displayed on a 6-bit display by converting it into four 6-bit pixel values 31, 32, 32, and 32 in accordance with the expression 127 = (124+128+128+128)/4 = 31+32+32+32.

In the FRC, a target frame is converted into frames the number of which is equal to a control multiple, that is, into four frames in this case. Now, assume that the four frames are called first, second, third, and fourth frames in display time series. In this case, the pixel values of pixels at the position of the target pixel in the first to fourth frames correspond to the 6-bit pixel values 31, 32, 32, and 32 in the FRC.

In the FRC, the first to fourth frames are displayed on the display at a display rate four times the original frame rate. In this case, at the position of the target pixel, the 6-bit pixel values 31, 32, 32, and 32 are integrated in a time direction in human vision, so that the pixel value looks like 127.

As described above, in the FRC, 127 as an 8-bit pixel value is expressed in a pseudo manner with use of a visual integration effect in which integration in a time direction is performed in human vision.

Another example of the method for performing the gradation conversion is an error diffusion method (e.g., see "Yoku wakaru dijitaru gazou shori" by Hitoshi KIYA, Sixth edition, CQ Publishing, Co. Ltd., January 2000, pp. 196-213).

In the error diffusion method, two-dimensional $\Delta\Sigma$ modulation is performed, whereby error diffusion of shaping a quantization error as noise to a high range of spatial frequencies is performed. The noise is added to a pixel value and then the pixel value is quantized into a desired number of bits.

In the error diffusion method, a pixel value is quantized after noise has been added thereto, as described above. Therefore, in a quantized (gradation-converted) image, it looks like PWM (Pulse Width Modulation) has been performed on pixel values that become constant only by truncating lower bits. As a result, the gradation of a gradation-converted image looks like it smoothly changes due to a visual integration effect in which integration in space directions is performed in human vision. That is, a gradation level equivalent to that of an original image (e.g., 256 (= $2^8$)-gradation when the original image is an 8-bit image as described above) can be expressed in a pseudo manner.

Also, in the error diffusion method, noise (quantization error) after noise shaping is added to a pixel value in consideration that the sensitivity of human vision is low in a high range of spatial frequencies. Accordingly, the level of noise noticeable in a gradation-converted image can be decreased.

SUMMARY OF THE INVENTION

In the FRC, a high gradation level is realized in a pseudo manner by using a visual integration effect in a time direction, as described above. However, when changes of pixel values at the same position are significant due to a motion in images, so-called flicker may become noticeable.

On the other hand, in the error diffusion method, noise (quantization error) after noise shaping is added to a pixel value, but the quantization error on which noise shaping is performed is a quantization error of (a pixel value of) a pixel that is spatially approximate to a target pixel. For this reason, in the error diffusion method, when an original image is a still image, quantization errors of pixels at the same position of respective frames have a same value, and same noise (noise after noise shaping) is added to the pixel values of the pixels at the same position of the respective frames.

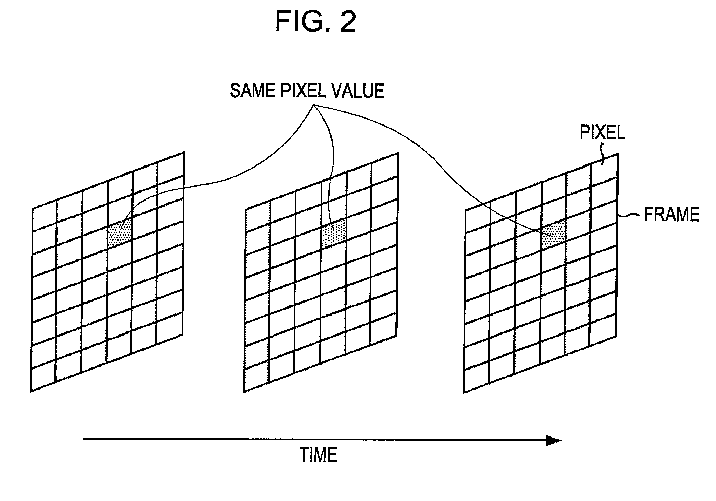

Fig. 2 illustrates three sequential frames of an original image on which gradation conversion is to be performed (hereinafter referred to as target image).

When the target image is a still image, the pixel values of pixels at the same position in the respective three frames in Fig. 2 are the same. Therefore, the quantization errors of the pixels at the same position in the respective three frames in Fig. 2 are the same, and the noises added to the pixel values of the pixels at the same position before quantization are the same. As a result, the pixel values of the pixels at the same position in the respective three frames in Fig. 2 are also the same after gradation conversion.

Note that, in the FRC, the pixel values of pixels at the same position in a plurality of sequential frames of a gradation-converted image may be different from each other, even when the image is a still image.

In the error diffusion method, flicker does not occur unlike in the FRC. However, in the error diffusion method, noise is added to a target image, and thus the noise added to pixel values may be noticeable when a gradation-converted image in which (quantized) pixel values change in low frequencies is obtained in a case where an amplitude level of one step of gradation is high in the gradation-conversion image (e.g., in a case where an amplitude level of one step of gradation is high in a 6-bit image obtained through gradation conversion performed on an 8-bit image).

Accordingly, it is desirable to improve a perceived quality of a gradation-converted image.

According to an embodiment of the present invention, there is provided an image processing apparatus including gradation converting means for simultaneously performing space-direction $\Delta\Sigma$ modulation and time-direction $\Delta\Sigma$ modulation on an image, thereby converting a gradation level of the image. Also, there is provided a program causing a computer to function as the image processing apparatus.

According to an embodiment of the present invention, there is provided an image processing method for an image processing apparatus that performs gradation conversion on an image. The image processing method includes the step of simultaneously performing space-direction $\Delta\Sigma$ modulation and time-direction $\Delta\Sigma$ modulation on an image, thereby converting a gradation level of the image.

In the foregoing image processing apparatus, image processing method, and program, space-direction $\Delta\Sigma$ modulation and time-direction $\Delta\Sigma$ modulation are simultaneously performed on an image, whereby a gradation level of the image is converted.

The image processing apparatus may be an independent apparatus or may be an internal block constituting an apparatus.

The program can be provided by being transmitted via a transmission medium or by being recorded on a recording medium.

According to the above-described embodiments of the present invention, a perceived quality of a gradation-converted can be improved.

BRIEF DESCRIPTION OF THE DRAWINGS

Fig. 1 explains frame rate control;
Fig. 2 illustrates three sequential frames of a target image;
Fig. 3 is a block diagram illustrating an exemplary configuration of an image processing apparatus according to an embodiment of the present invention;
Fig. 4 is a block diagram illustrating an exemplary configuration of a gradation converting unit in the image processing apparatus;

Fig. 5 is a flowchart illustrating a gradation converting process performed by the gradation converting unit;

Fig. 6 is a block diagram illustrating an exemplary configuration of the gradation converting unit in a case where a frame memory is adopted as a time-direction filter;

Fig. 7 illustrates quantization errors used for filtering in a three-dimensional filtering unit;

Fig. 8 is a block diagram illustrating a configuration of a space-direction $\Delta\Sigma$ modulator that performs only space-direction $\Delta\Sigma$ modulation;

Fig. 9 illustrates a pixel region where a quantization error of a target pixel is diffused in the space-direction $\Delta\Sigma$ modulator;

Figs. 10A and 10B illustrate amplitude characteristics of noise shaping based on space-direction $\Delta\Sigma$ modulation;

Fig. 11 is a block diagram illustrating a configuration of a time-direction $\Delta\Sigma$ modulator that performs only time-direction $\Delta\Sigma$ modulation;

Figs. 12A and 12B illustrate amplitude characteristics of noise shaping based on time-direction $\Delta\Sigma$ modulation;

Fig. 13 is a block diagram illustrating another exemplary configuration of the gradation converting unit;

Fig. 14 illustrates an amplitude characteristic of noise shaping using a Jarvis filter and an amplitude characteristic of noise shaping using a Floyd filter;

Fig. 15 illustrates an amplitude characteristic of noise shaping using the Jarvis filter and an amplitude characteristic of noise shaping using the Floyd filter;

Fig. 16 illustrates an amplitude characteristic of noise shaping using an SBM filter;

Figs. 17A and 17B illustrate a first example of filter coefficients and an amplitude characteristic of noise shaping using the SBM filter;

Figs. 18A and 18B illustrate a second example of filter coefficients and an amplitude characteristic of noise shaping using the SBM filter;

Figs. 19A and 19B illustrate a third example of filter coefficients and an amplitude characteristic of noise shaping using the SBM filter; and

Fig. 20 is a block diagram illustrating an exemplary configuration of a computer according to an embodiment of the present invention.

## DESCRIPTION OF THE PREFERRED EMBODIMENTS

Exemplary configuration of an image processing apparatus according to an embodiment of the present invention

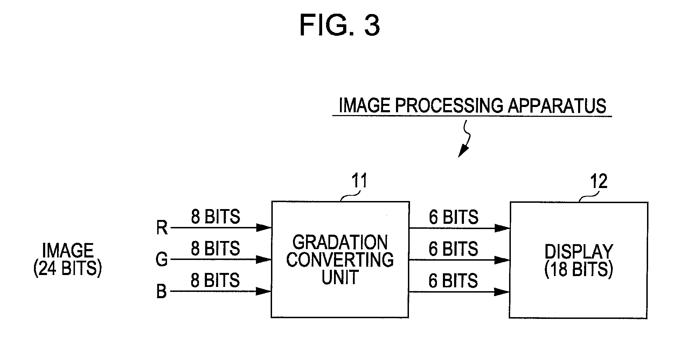

Fig. 3 is a block diagram illustrating an exemplary configuration of an image processing apparatus according to an embodiment of the present invention.

The image processing apparatus in Fig. 3 includes a gradation converting unit 11 and a display 12, and is applied to a television receiver (hereinafter referred to as TV) or the like.

The gradation converting unit 11 is supplied with, as a target image, an image in which each of RGB components is 8 bits. The gradation converting unit 11 converts the gradation level of the 8-bit image (target image) supplied thereto by simultaneously performing $\Delta\Sigma$ modulation in space directions (hereinafter referred to as space-direction $\Delta\Sigma$ modulation) and $\Delta\Sigma$ modulation in a time direction (hereinafter referred to as time-direction $\Delta\Sigma$ modulation) on the 8-bit image.

That is, the gradation converting unit 11 converts the 8-bit image supplied thereto into a 6-bit image (an image in which each of RGB components is 6 bits), for example.

Then, the gradation converting unit 11 supplies the (gradation-converted) 6-bit image obtained through gradation conversion to the display 12.

The display 12 is a 6-bit LCD capable of displaying a 6-bit image and displays the 6-bit image supplied from the gradation converting unit 11.

In the gradation converting unit 11, gradation conversion of the 8-bit image is performed independently for each of RGB components.

Exemplary configuration of the gradation converting unit 11

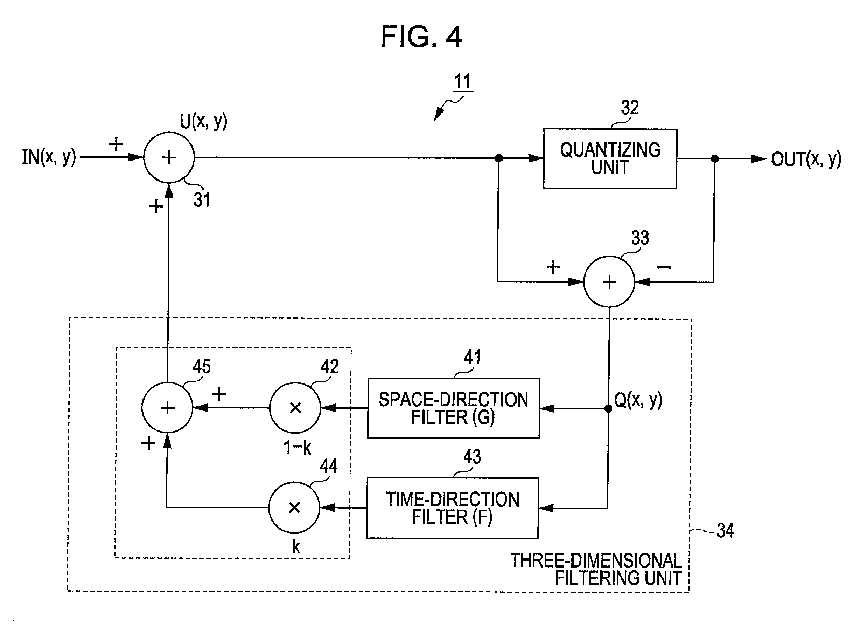

Fig. 4 illustrates an exemplary configuration of the gradation converting unit 11 in Fig. 3.

The gradation converting unit 11 includes a calculating unit 31, a quantizing unit 32, a calculating unit 33, and a three-dimensional filtering unit 34.

The calculating unit 31 is supplied with pixel values $IN(x, y)$ of pixels in a target image in a raster scanning order. Furthermore, the calculating unit 31 is supplied with outputs of the three-dimensional filtering unit 34.

The calculating unit 31 adds the pixel value $IN(x, y)$ of the target image and the output of the three-dimensional filtering unit 34 and supplies (outputs) a sum value $U(x, y)$ obtained thereby to the quantizing unit 32 and the calculating unit 33.

Here, IN(x, y) represents the pixel value of the pixel (x, y) x-th from the left and y-th from the top. U(x, y) represents a sum value of the pixel value IN(x, y) and the output of the three-dimensional filtering unit 34.

The quantizing unit 32 quantizes the sum value U(x, y), which is the output of the calculating unit 31, into the number of bits of an image that can be displayed on the display 12 (Fig. 3), that is, 6 bits in this case, and outputs a quantized value obtained thereby as a pixel value OUT(x, y) of the pixel (x, y) in a gradation-converted image.

The pixel value OUT(x, y) output from the quantizing unit 32 is supplied to the display 12 and also to the calculating unit 33.

The calculating unit 33 calculates a difference U(x, y)-OUT(x, y) between the sum value U(x, y), which is the output of the calculating unit 31, and the pixel value OUT(x, y) as a quantized value of the sum value U(x, y), which is the output of the quantizing unit 32, thereby obtaining a quantization error Q(x, y) included in the pixel value OUT(x, y) as a quantized value, and outputs the quantization error Q(x, y).

The quantization error Q(x, y) output from the calculating unit 33 is supplied to the three-dimensional filtering unit 34.

The three-dimensional filtering unit 34 performs filtering in space and time directions on the quantization error Q(x, y) supplied from the calculating unit 33 and supplies (outputs) a filtering result to the calculating unit 31.

Specifically, referring to Fig. 4, the three-dimensional filtering unit 34 includes a space-direction filter 41, a calculating unit 42, a time-direction filter 43, and calculating units 44 and 45.

The space-direction filter 41 is supplied with the quantization error Q(x, y) from the calculating unit 33. The space-direction filter 41 is a two-dimensional filter, such as a two-dimensional FIR (Finite Impulse Response) filter. The space-direction filter 41 performs filtering in space directions (hereinafter referred to as space-direction filtering) on the quantization error Q(x, y) supplied from the calculating unit 33 and supplies (outputs) a filtering result to the calculating unit 42.

That is, assume that the calculating unit 31 is supplied with the pixel value IN(x, y) and that the pixel (x, y) as a target of gradation conversion is called a target pixel. Then, the space-direction filter 41 performs filtering by using quantization errors of pixels that are spatially approximate to the target pixel.

The calculating unit 42 multiplies the output of the space-direction filter 41 by a predetermined weight 1-k and supplies a product obtained thereby to the calculating unit 45.

Here, k is a real number in the range from 0 to 1. The value k may be a fixed value of 0.5, for example, or may be a variable value that varies in accordance with a user operation.

The time-direction filter 43 is supplied with the quantization error Q(x, y) from the calculating unit 33. The time-direction filter 43 is a one-dimensional filter, such as a one-dimensional FIR filter. The time-direction filter 43 performs filtering in a time direction (hereinafter referred to as time-direction filtering) on the quantization error Q(x, y) supplied from the calculating unit 33 and supplies (outputs) a filtering result to the calculating unit 44.

That is, the time-direction filter 43 performs filtering by using quantization errors of pixels that are temporally approximate to the target pixel.

The calculating unit 44 multiplies the output of the time-direction filter 43 by a predetermined weight k and supplies a product obtained thereby to the calculating unit 45.

The calculating unit 45 adds the product supplied from the calculating unit 42 and the product supplied from the calculating unit 44 and supplies a sum value obtained thereby, as a filtering result of the three-dimensional filtering unit 34, to the calculating unit 31.

In Fig. 4, the calculating units 42, 44, and 45 constitute a weighting addition unit that performs weighting addition of the output of the space-direction filter 41 and the output of the time-direction filter 43 and that outputs a weighted sum as a filtering result in space and time directions of a quantization error.

When a transfer function of the space-direction filter 41 is represented by G and when a transfer function of the time-direction filter 43 is represented by F, the pixel value OUT(x, y) of a gradation-converted image is expressed by expression (1).

$$OUT(x, y) = IN(x, y)-(1-k)(1-G)Q(x, y)-k(1-F)Q(x, y) \cdots (1)$$

In expression (1), the quantization error Q(x, y) is modulated with each of -(1-G) and -(1-F). The modulation with -(1-G) corresponds to noise shaping based on space-direction $\Delta\Sigma$ modulation performed on the quantization error Q(x, y), and the modulation with -(1-F) corresponds to noise shaping based on time-direction $\Delta\Sigma$ modulation performed on the quantization error Q(x, y).

Also, in expression (1), a value obtained through weighting with a weight 1-k performed on a value obtained by modulating the quantization error Q(x, y) with -(1-G) (a value obtained through multiplication by a weight 1-k) and a value obtained through weighting with a weight k performed on a value obtained by modulating the quantization error Q(x, y) with -(1-F) are added to the pixel value IN(x, y).

Therefore, in the gradation converting unit 11 in Fig. 4, an effect of space-direction ΔΣ modulation using the space-direction filter 41 works in accordance with only the weight 1-k, and an effect of time-direction ΔΣ modulation using the time-direction filter 43 works in accordance with only the weight k.

Process performed by the gradation converting unit 11

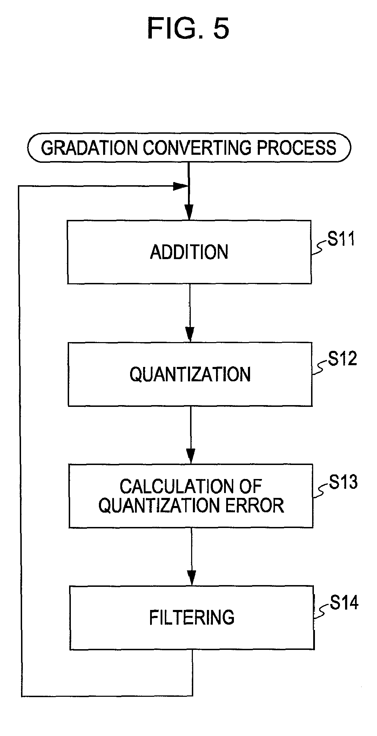

Fig. 5 is a flowchart illustrating a gradation converting process performed by the gradation converting unit 11 in Fig. 4.

The calculating unit 31 waits for and receives a pixel value of a pixel in a target image supplied thereto, and adds an output of the three-dimensional filtering unit 34 while regarding the pixel having the supplied pixel value as a target pixel in step S11.

Specifically, in step S11, the calculating unit 31 adds the pixel value and a value obtained through the preceding filtering performed by the three-dimensional filtering unit 34 in step S14 described below (an output of the three-dimensional filtering unit 34), and outputs a sum value obtained thereby to the quantizing unit 32 and the calculating unit 33. Then, the process proceeds to step S12.

In step S12, the quantizing unit 32 quantizes the sum value as the output of the calculating unit 31, and outputs a quantized value including a quantization error, the quantized value serving as a result of ΔΣ modulation (a result of gradation conversion based on ΔΣ modulation). Then, the process proceeds to step S13.

In step S13, the calculating unit 33 calculates a difference between the sum value as the output of the calculating unit 31 and the output of the quantizing unit 32 (the quantized value of the sum value as the output of the calculating unit 31), thereby obtaining a quantization error of the quantization performed by the quantizing unit 32. Furthermore, the calculating unit 33 supplies the quantization error to the three-dimensional filtering unit 34, and the process proceeds from step S13 to step S14.

In step S14, the three-dimensional filtering unit 34 performs space-direction filtering and time-direction filtering on the quantization error supplied from the calculating unit 33.

Specifically, in the three-dimensional filtering unit 34, the quantization error supplied from the calculating unit 33 is supplied to the space-direction filter 41 and the time-direction filter 43.

The space-direction filter 41 performs space-direction filtering on the quantization error supplied from the calculating unit 33 and supplies a filtering result to the calculating unit 42. The calculating unit 42 multiplies the output of the space-direction filter 41 by a predetermined weight 1-k and supplies a product obtained thereby to the calculating unit 45.

On the other hand, the time-direction filter 43 performs time-direction filtering on the quantization error supplied from the calculating unit 33 and supplies a filtering result to the calculating unit 44. The calculating unit 44 multiplies the output of the time-direction filter 43 by a predetermined weight k and supplies a product obtained thereby to the calculating unit 45.

The calculating unit 45 adds the product supplied from the calculating unit 42 and the product supplied from the calculating unit 44 and supplies a sum value as a filtering result of the three-dimensional filtering unit 34 to the calculating unit 31.

Then, when a pixel value of a pixel next to the target pixel in the raster scanning order is supplied to the calculating unit 31, the process returns from step S14 to step S11.

In step S11, the calculating unit 31 regards the pixel next to the target pixel as a new target pixel, and adds the pixel value of the new target pixel and the filtering result supplied from the three-dimensional filtering unit 34 in the preceding step S14. Thereafter, the same process is repeated.

As described above, in the gradation converting unit 11, the three-dimensional filtering unit 34 performs space-direction filtering and time-direction filtering on the quantization error supplied from the calculating unit 33. Accordingly, space-direction ΔΣ modulation and time-direction ΔΣ modulation are simultaneously performed on the target image.

That is, in the gradation converting unit 11, an effect of space-direction ΔΣ modulation (an effect of noise shaping) occurs in accordance with only the weight 1-k, and an effect of time-direction ΔΣ modulation occurs in accordance with only the weight k, whereby the quantization error is diffused in both space and time directions.

As a result of the quantization error diffusion in both space and time directions, the gradation of an image on which gradation conversion has been performed by the gradation converting unit 11 looks like it smoothly changes due to integration effects in space and time directions in human vision.

Furthermore, since the quantization error is diffused not only in space directions but also in a time direction, noticeable noise (quantization error) in a gradation-converted image can be suppressed compared to the error diffusion method according to a related art in which only space-direction ΔΣ modulation is performed, so that a perceived quality of the gradation-converted image can be improved.

Also, since the quantization error is diffused not only in a time direction but also in space directions, flicker in an image, like flicker occurring in the FRC, which would occur if only time-direction $\Delta\Sigma$ modulation is performed, can be suppressed. Accordingly, a perceived quality of the gradation-converted image can be improved.

Specific example of the time-direction filter 43

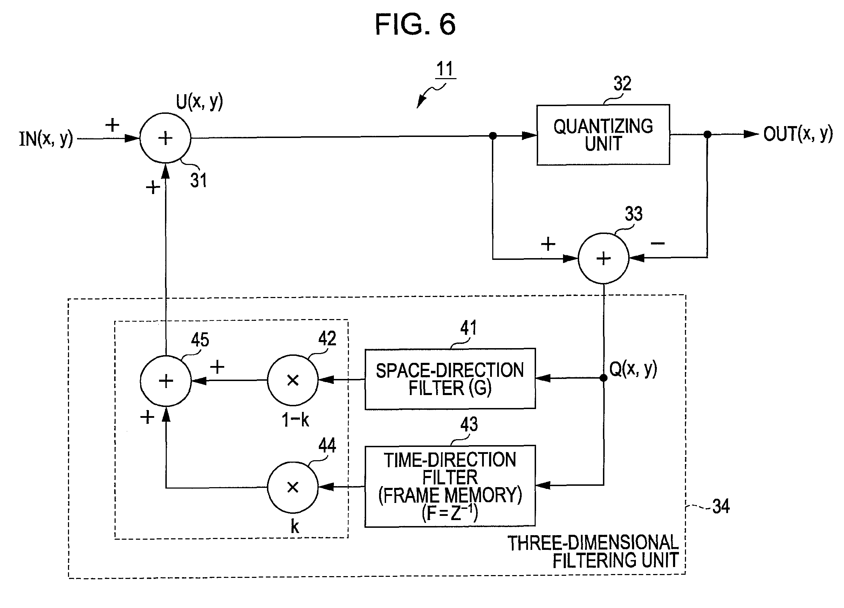

Fig. 6 illustrates an exemplary configuration of the gradation converting unit 11 in a case where a frame memory is adopted as the time-direction filter 43 in Fig. 4.

In a case where the time-direction filter 43 performs time-direction filtering of multiplying a quantization error of a pixel in the preceding frame by a filter coefficient of 1.0 and outputting a product as a filtering result, the time-direction filter 43 can be constituted by a single frame memory.

The time-direction filtering of multiplying a quantization error of a pixel in the preceding frame by a filter coefficient of 1.0 and outputting a product as a filtering result can be performed also by a FIFO (First In First Out) memory or the like that is capable of storing quantization errors of one frame, as well as by a single frame memory.

In the gradation converting unit 11 in Fig. 6, the time-direction filter 43 is constituted by a single frame memory. In the time-direction filter 43, a delay corresponding to the time of a frame is caused for the quantization error $Q(x, y)$ as the time-direction filtering, and a filtering result is supplied to the calculating unit 44.

When a transfer function F of the time-direction filter 43 that causes the delay corresponding to the time of a frame as time-direction filtering is represented by $Z^{-1}$, the following expressions (2) and (3) are established in the gradation converting unit 11 in Fig. 6.

$$Q(x, y) = U(x, y) - OUT(x, y) \cdots (2)$$

$$U(x, y) = IN(x, y) + (1-k)GQ(x, y) - kZ^{-1}Q(x, y) \cdots (3)$$

Substituting expression (3) into expression (2) and erasing $U(x, y)$ causes expression (4) to be obtained.

$$OUT(x, y) = IN(x, y) - (1-k)(1-G)Q(x, y) - k(1-Z^{-1})Q(x, y) \cdots (4)$$

Expression (4) is equal to expression (1) except that the transfer function F is replaced by $Z^{-1}$.

According to expression (4), the gradation converting unit 11 performs space-direction $\Delta\Sigma$ modulation in which noise shaping with $-(1-G)$ is performed on the quantization error $Q(x, y)$. Furthermore, the gradation converting unit 11 performs time-direction $\Delta\Sigma$ modulation in which noise shaping with $-(1-Z^{-1})$ is performed on the quantization error $Q(x, y)$, that is, time-direction $\Delta\Sigma$ modulation of diffusing a quantization error of a pixel in the preceding frame at the same position as that of a target pixel to the target pixel, together with the space-direction $\Delta\Sigma$ modulation.

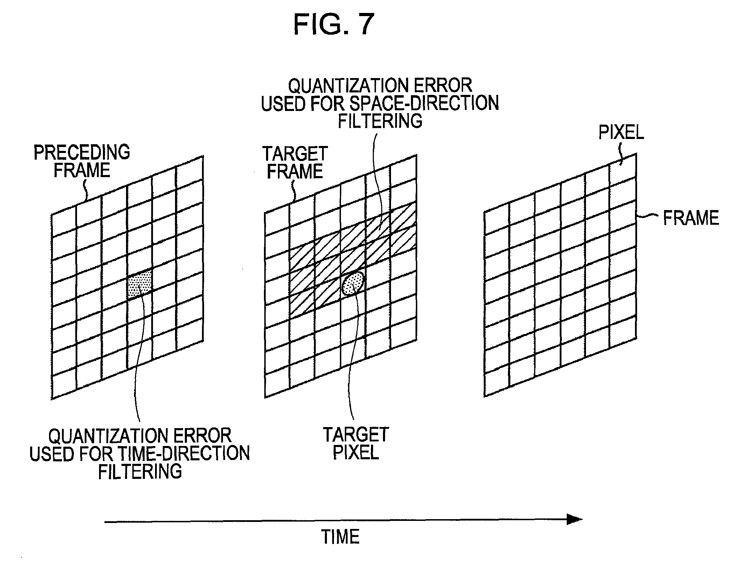

Fig. 7 illustrates quantization errors used for filtering in the three-dimensional filtering unit 34 of the gradation converting unit 11 in Fig. 6.

In the three-dimensional filtering unit 34 (Fig. 6), the space-direction filter 41 performs space-direction filtering by using quantization errors of 12 pixels (square regions with sloping lines in Fig. 7) on which gradation conversion has already been performed in the raster scanning order among 5 horizontal x 5 vertical pixels, with a target pixel being at the center, in the frame of the target pixel (target frame).

The time-direction filter 43 performs time-direction filtering by using a quantization error of a pixel at the same position as that of the target pixel (a shaded square region in Fig. 7) in the preceding frame of the target frame.

Next, the space-direction $\Delta\Sigma$ modulation and the time-direction $\Delta\Sigma$ modulation that are simultaneously performed by the gradation converting unit 11 in Fig. 6 are described separately.

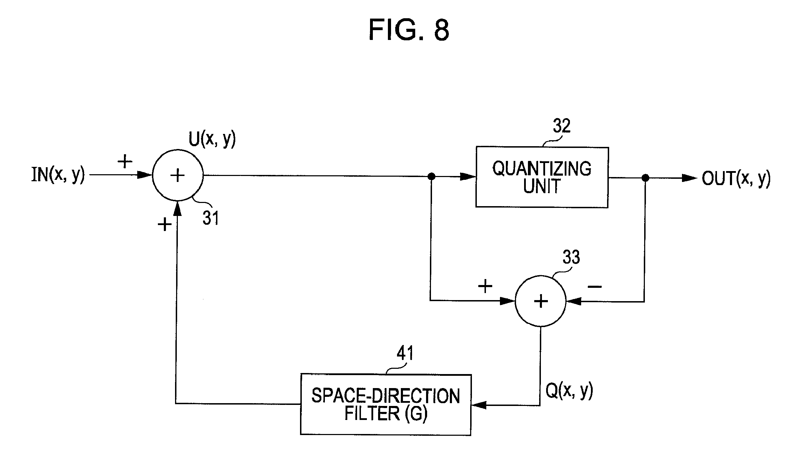

Fig. 8 illustrates a configuration of a portion for performing only space-direction $\Delta\Sigma$ modulation (hereinafter referred to as space-direction $\Delta\Sigma$ modulator) in the gradation converting unit 11. In this configuration, the weight k is set to 0.

In the space-direction $\Delta\Sigma$ modulator, the calculating unit 31 adds an 8-bit pixel value $IN(x, y)$ of a pixel $(x, y)$ in a target image and an output of the space-direction filter 41, and supplies a sum value obtained thereby to the quantizing unit 32 and the calculating unit 33.

The quantizing unit 32 quantizes the sum value supplied from the calculating unit 31 into 6 bits, and outputs a 6-bit quantized value obtained thereby as a pixel value $OUT(x, y)$ of the pixel $(x, y)$ in a gradation-converted image.

The pixel value $OUT(x, y)$ output from the quantizing unit 32 is also supplied to the calculating unit 33.

The calculating unit 33 subtracts the pixel value OUT(x, y) supplied from the quantizing unit 32 from the sum value supplied from the calculating unit 31, that is, subtracts the output from the quantizing unit 32 from the input to the quantizing unit 32, thereby obtaining a quantization error Q(x, y) generated from the quantization performed by the quantizing unit 32, and supplies the quantization error Q(x, y) to the space-direction filter 41.

The space-direction filter 41 filters the quantization error Q(x, y) supplied from the calculating unit 33 and outputs a filtering result to the calculating unit 31.

The calculating unit 31 adds the filtering result of the quantization error Q(x, y) output from the space-direction filter 41 and the pixel value IN(x, y) in the above-described manner.

According to the space-direction $\Delta\Sigma$ modulator in Fig. 8, the quantization error Q(x, y) is fed back to the calculating unit 31 via the space-direction filter 41, which is a two-dimensional filter. Accordingly, noise (quantization error Q(x, y)) is diffused (noise shaping is performed) to a high range of spatial frequencies in either of the space directions, i.e., a horizontal direction (x direction) and a vertical direction (y direction).

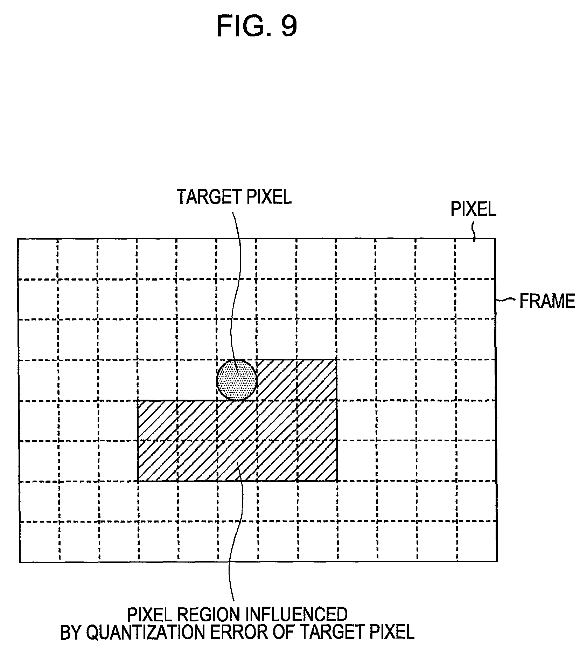

Fig. 9 illustrates a pixel region where a quantization error Q(x, y) of a target pixel is diffused in the space-direction $\Delta\Sigma$ modulator in Fig. 8.

For example, as described above with reference to Fig. 7, in a case where the space-direction filter 41 performs space-direction filtering by using quantization errors of 12 pixels on which gradation conversion has already been performed in the raster scanning order among 5 horizontal x 5 vertical pixels, with a target pixel being at the center, in a target frame, the quantization error Q(x, y) of the target pixel is diffused to pixels on which gradation conversion is to be performed in the raster scanning order (prospective target pixels, i.e., square regions with sloping lines in Fig. 9) among the foregoing 5x5 pixels.

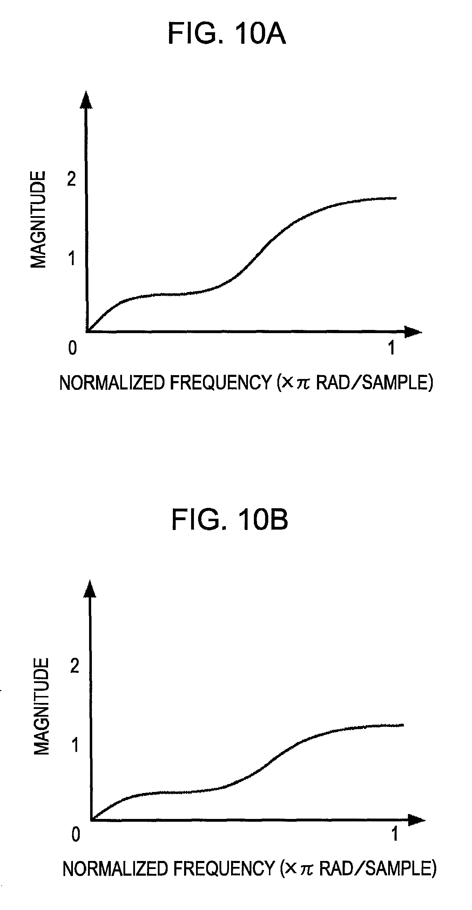

Figs. 10A and 10B illustrate amplitude characteristics of noise shaping based on space-direction $\Delta\Sigma$ modulation.

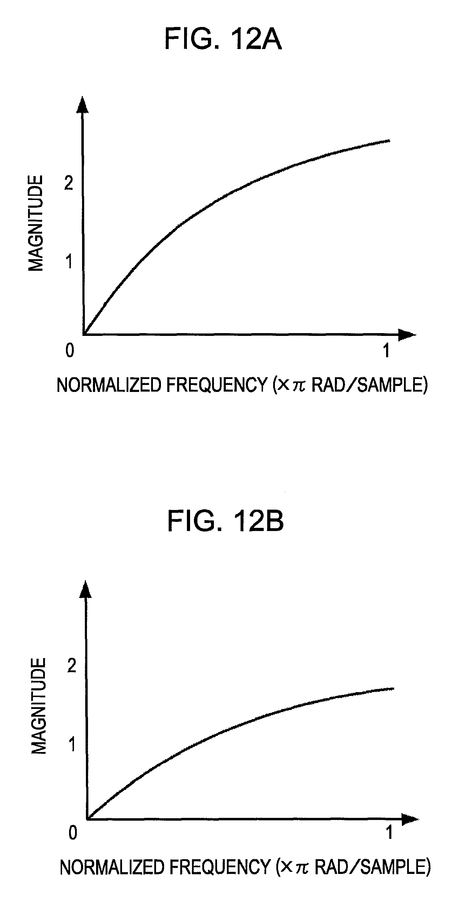

In Figs. 10A and 10B (also in Figs. 12A and 12B described below), the horizontal axis indicates the frequency in which half of a sampling frequency of pixels in a target image (gradation-converted image) is normalized as 1, whereas the vertical axis indicates the gain.

Fig. 10A illustrates an amplitude characteristic of noise shaping based on space-direction $\Delta\Sigma$ modulation performed by the space-direction $\Delta\Sigma$ modulator in Fig. 8.

In the space-direction $\Delta\Sigma$ modulator in Fig. 8, the calculating unit 31 adds the noise (quantization error) of the amplitude characteristic in Fig. 10A to pixel values of the target image.

Fig. 10B illustrates an amplitude characteristic of noise shaping based on space-direction $\Delta\Sigma$ modulation performed by the gradation converting unit 11 in Fig. 6.

In the gradation converting unit 11 in Fig. 6, the calculating unit 42 multiplies the output of the space-direction filter 41 by the weight 1-k, so that the amplitude characteristic of noise shaping based on space-direction $\Delta\Sigma$ modulation is 1-k times the amplitude characteristic in Fig. 10A.

In the space-direction $\Delta\Sigma$ modulation performed by the gradation converting unit 11 in Fig. 6, the calculating unit 31 adds the noise (quantization error) of the amplitude characteristic in Fig. 10B to pixel values of the target image.

Therefore, in the space-direction $\Delta\Sigma$ modulation performed by the gradation converting unit 11 in Fig. 6, noise of a lower level (1-k times) than that in the case of Fig. 10A is added to pixel values of the target image, and thus the noise (quantization error) diffused in space directions is smaller than that in the case of the space- direction $\Delta\Sigma$ modulator in Fig. 8.

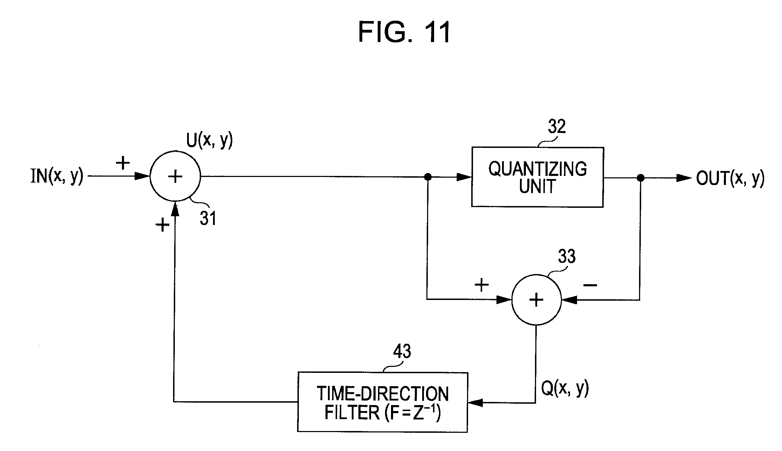

Fig. 11 illustrates a configuration of a portion for performing only time-direction $\Delta\Sigma$ modulation (hereinafter referred to as time-direction $\Delta\Sigma$ modulator) in the gradation converting unit 11. In this configuration, the weight k is set to 1.

In the time-direction $\Delta\Sigma$ modulator, the calculating unit 31 adds an 8-bit pixel value IN(x, y) of a pixel (x, y) in a target image and an output of the time-direction filter 43, and supplies a sum value obtained thereby to the quantizing unit 32 and the calculating unit 33.

The quantizing unit 32 quantizes the sum value supplied from the calculating unit 31 into 6 bits, and outputs a 6-bit quantized value obtained thereby as a pixel value OUT(x, y) of the pixel (x, y) in a gradation-converted image.

The pixel value OUT(x, y) output from the quantizing unit 32 is also supplied to the calculating unit 33.

The calculating unit 33 subtracts the pixel value OUT(x, y) supplied from the quantizing unit 32 from the sum value supplied from the calculating unit 31, that is, subtracts the output from the quantizing unit 32 from the input to the quantizing unit 32, thereby obtaining a quantization error Q(x, y) generated from the quantization performed by the quantizing unit 32, and supplies the quantization error Q(x, y) to the time-direction filter 43.

The time-direction filter 43 filters the quantization error Q(x, y) supplied from the calculating unit 33 and outputs a filtering result to the calculating unit 31.

The calculating unit 31 adds the filtering result of the quantization error Q(x, y) output from the time-direction filter 43 and the pixel value IN(x, y) in the above-described manner.

According to the time-direction $\Delta\Sigma$ modulator in Fig. 11, the quantization error Q(x, y) is fed back to the calculating unit 31 via the time-direction filter 43, which is a frame memory. Accordingly, noise (quantization error Q(x, y)) is diffused (noise shaping is performed) in a direction from the preceding frame to the target frame, that is, in a time direction.

Figs. 12A and 12B illustrate amplitude characteristics of noise shaping based on time-direction ΔΣ modulation.

Fig. 12A illustrates an amplitude characteristic of noise shaping based on time-direction ΔΣ modulation performed by the time-direction ΔΣ modulator in Fig. 11.

In the time-direction ΔΣ modulator in Fig. 11, the calculating unit 31 adds the noise (quantization error) of the amplitude characteristic in Fig. 12A to pixel values of the target image.

Fig. 12B illustrates an amplitude characteristic of noise shaping based on time-direction ΔΣ modulation performed by the gradation converting unit 11 in Fig. 6.

In the gradation converting unit 11 in Fig. 6, the calculating unit 44 multiplies the output of the time-direction filter 43 by the weight k, so that the amplitude characteristic of noise shaping based on time-direction ΔΣ modulation is k times the amplitude characteristic in Fig. 12A.

In the time-direction ΔΣ modulation performed by the gradation converting unit 11 in Fig. 6, the calculating unit 31 adds the noise (quantization error) of the amplitude characteristic in Fig. 12B to pixel values of the target image.

Therefore, in the time-direction ΔΣ modulation performed by the gradation converting unit 11 in Fig. 6, noise of a lower level (k times) than that in the case of Fig. 12A is added to pixel values of the target image, and thus the noise (quantization error) diffused in a time direction is smaller than that in the case of the time-direction ΔΣ modulator in Fig. 11.

When the weight k is larger than 0 and smaller than 1, space-direction ΔΣ modulation and time-direction ΔΣ modulation are performed in the gradation converting unit 11 in Fig. 6, as described above. In this case, the noise diffused in space directions in the space-direction ΔΣ modulation and the noise diffused in a time direction in the time-direction ΔΣ modulation are small.

Therefore, noticeable noise (quantization error) in a gradation-converted image can be suppressed compared to the error diffusion method according to a related art in which only space-direction ΔΣ modulation is performed, so that a perceived quality of the gradation-converted image can be improved.

Furthermore, flicker in an image, like flicker occurring in the FRC, which would occur due to time-direction ΔΣ modulation, can be suppressed, so that a perceived quality of the gradation-converted image can be improved.

In Fig. 6, the time-direction filter 43 is constituted by a single frame memory. Alternatively, the time-direction filter 43 may be constituted by a plurality of frame memories, so that time-direction filtering can be performed by using a quantization error of a pixel at the same position as that of the target pixel in each of a plurality of preceding frames of the target frame. When the time-direction filter 43 is constituted by a plurality of frame memories, noise shaping having an amplitude characteristic different from that of the noise shaping in a case where the time-direction filter 43 is constituted by a single frame memory can be realized.

In the three-dimensional filtering unit 34 illustrated in Figs. 4 and 6, the space-direction filter 41 performs filtering by using quantization errors of pixels spatially approximate to the target pixel, and the time-direction filter 43 performs filtering by using quantization errors of pixels temporally approximate to the target pixel, whereby filtering in space and time directions is performed on the quantization error. The three-dimensional filtering unit 34 can perform the filtering in space and time directions on the quantization error by performing filtering with a simultaneous use of quantization errors of pixels spatially and temporally approximate to the target pixel.

Another exemplary configuration of the gradation converting unit 11

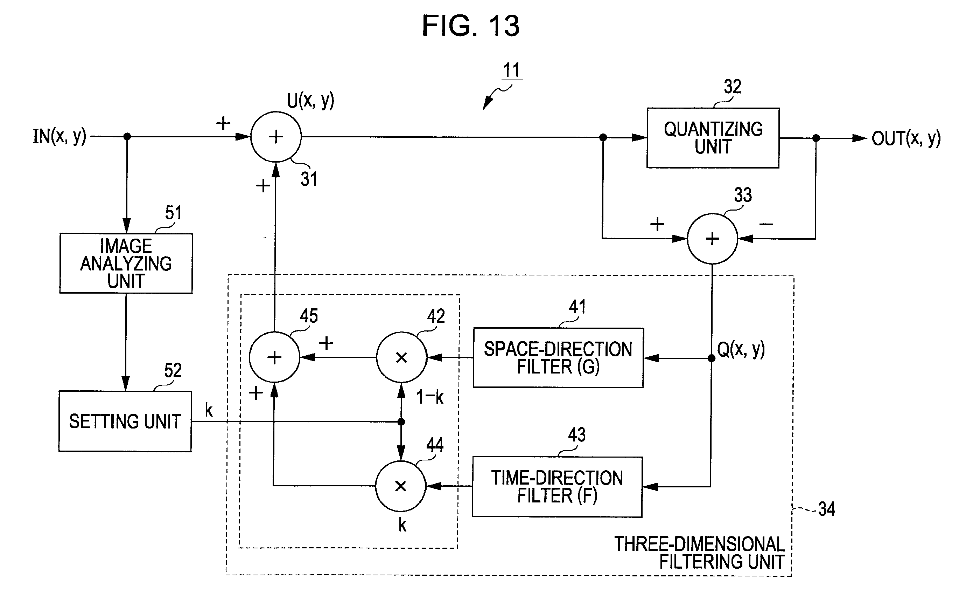

Fig. 13 illustrates another exemplary configuration of the gradation converting unit 11 in Fig. 3.

In Fig. 13, the parts corresponding to those in Fig. 4 are denoted by the same reference numerals, and the description thereof is appropriately omitted.

The gradation converting unit 11 in Fig. 13 is common to that in Fig. 4 in including the calculating unit 31, the quantizing unit 32, the calculating unit 33, and the three-dimensional filtering unit 34.

However, the gradation converting unit 11 in Fig. 13 is different from that in Fig. 4 in further including an image analyzing unit 51 and a setting unit 52.

The image analyzing unit 51 is supplied with a target image. The image analyzing unit 51 analyzes a target frame of the target image, thereby detecting a motion in the target frame, and supplies motion information indicating the motion to the setting unit 52.

Here, the image analyzing unit 51 obtains, as the motion information, a sum of absolute differences of pixel values of pixels at the same position of the target frame and the preceding frame.

The setting unit 52 sets a weight k on the basis of a result of analysis of the target frame performed by the image analyzing unit 51, that is, on the basis of the motion information supplied from the image analyzing unit 51, and supplies the weight k to the calculating units 42 and 44.

Here, the setting unit 52 sets the weight k the value of which becomes smaller as the motion information is larger, that is, as the motion in the target frame is larger.

In the gradation converting unit 11 in Fig. 13, the calculating unit 42 multiplies an output of the space-direction filter 41 by a weight 1-k obtained based on the weight k supplied from the setting unit 52, whereas the calculating unit 44 multiplies an output of the time-direction filter 43 by the weight k supplied from the setting unit 52.

In the gradation converting unit 11 in Fig. 13, when the weight k is large, an effect of time-direction $\Delta\Sigma$ modulation is large whereas an effect of space-direction $\Delta\Sigma$ modulation is small. On the other hand, when the weight k is small, an effect of space-direction $\Delta\Sigma$ modulation is large whereas an effect of time-direction $\Delta\Sigma$ modulation is small.

Therefore, in the gradation converting unit 11 in Fig. 13, when the motion in the target frame is large, the weight k is small, e.g., the weight k is 0, and time-direction $\Delta\Sigma$ modulation does not work whereas space-direction $\Delta\Sigma$ modulation works.

If an effect of time-direction $\Delta\Sigma$ modulation is large when the motion in the target frame is large, a quantization error of a pixel having a weak correlation with a target pixel is diffused to the target pixel, which may cause a negative influence on a gradation-converted image.

In such a case where the motion in the target frame is large, a small value is set as the weight k so that the effect of time-direction $\Delta\Sigma$ modulation becomes small. Accordingly, a negative influence on a gradation-converted image, caused by diffusion of a quantization error of a pixel having a weak correlation with a target pixel to the target pixel, can be prevented.

Specific examples of the space-direction filter 41

As the space-direction filter 41 (Figs. 4, 6, and 13), a noise shaping filter used in the error diffusion method according to a related art can be adopted.

Examples of the noise shaping filter used in the error diffusion method according to the related art include a Jarvis, Judice & Ninke filter (hereinafter referred to as Jarvis filter) and a Floyd & Steinberg filter (hereinafter referred to as Floyd filter).

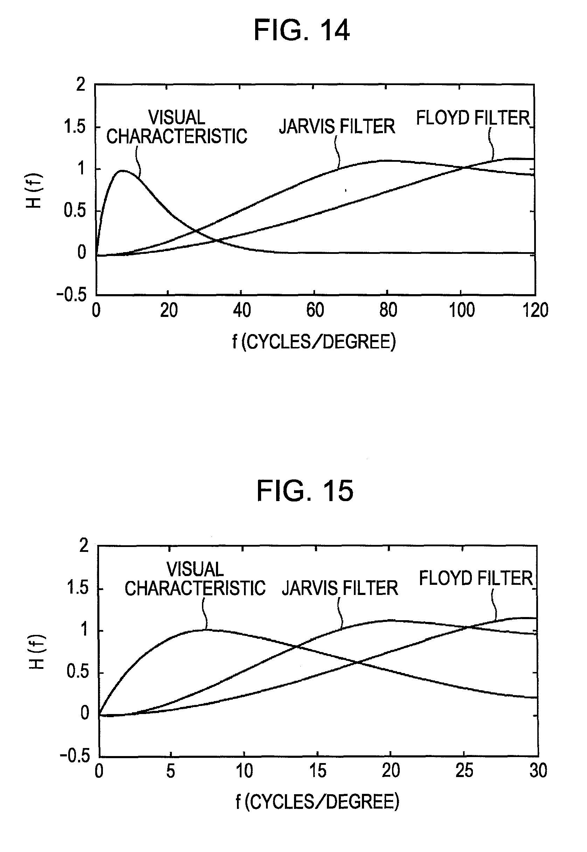

Fig. 14 illustrates an amplitude characteristic of noise shaping using the Jarvis filter and an amplitude characteristic of noise shaping using the Floyd filter.

In Fig. 14, a contrast sensitivity curve indicating a spatial frequency characteristic of human vision (hereinafter also referred to as visual characteristic) is illustrated in addition to the amplitude characteristics of noise shaping.

In Fig. 14 (also in Figs. 15, 16, 17B, 18B, and 19B described below), the horizontal axis indicates the spatial frequency, whereas the vertical axis indicates the gain for the amplitude characteristic or the sensitivity for the visual characteristic.

Here, the unit of the spatial frequency is cpd (cycles/degree), which indicates the number of stripes that are seen in the range of a unit angle of view (one degree in the angle of view). For example, 10 cpd means that ten pairs of a white line and a black line are seen in the range of one degree in the angle of view, and 20 cpd means that twenty pairs of a white line and a black line are seen in the range of one degree in the angle of view.

The gradation-converted image that is generated by the gradation converting unit 11 is eventually displayed on the display 12 (Fig. 3). Thus, from the viewpoint of improving the quality of the image to be displayed on the display 12, it is sufficient to consider up to a maximum spatial frequency of the image displayed on the display 12 (from 0 cpd) for the spatial frequency characteristic of human vision.

If the spatial frequency corresponding to the resolution of the display 12 is very high, e.g., about 120 cpd, noise (quantization error) is sufficiently modulated to a high range of a frequency band where the sensitivity of human vision is low by either of the Jarvis filter and the Floyd filter, as illustrated in Fig. 14.

The maximum spatial frequency of the image displayed on the display 12 depends on the resolution of the display 12 and the distance between the display 12 and a viewer who views the image displayed on the display 12 (hereinafter referred to as viewing distance).

Here, assume that the length in the vertical direction of the display 12 is H inches. In this case, about 2.5 H to 3.0 H is adopted as the viewing distance to obtain the maximum spatial frequency of the image displayed on the display 12.

In this case, for example, when the display 12 has a 40-inch display screen, having 1920 horizontal x 1080 vertical pixels, for displaying a so-called full HD (High Definition) image, the maximum spatial frequency of the image displayed on the display 12 is about 30 cpd.

Fig. 15 illustrates an amplitude characteristic of noise shaping using the Jarvis filter and an amplitude characteristic of noise shaping using the Floyd filter in a case where the maximum spatial frequency of the image displayed on the display 12 (Fig. 3) is about 30 cpd.

Fig. 15 also illustrates a visual characteristic, as in Fig. 14.

As illustrated in Fig. 15, in the case where the maximum spatial frequency of the image displayed on the display 12 is about 30 cpd, it is difficult for the Jarvis filter and the Floyd filter to sufficiently modulate noise to a high range of the frequency band where the sensitivity of human vision is sufficiently low.

Therefore, when the Jarvis filter or the Floyd filter is used, noise may be noticeable in a gradation-converted image, so that the perceived image quality thereof may be degraded.

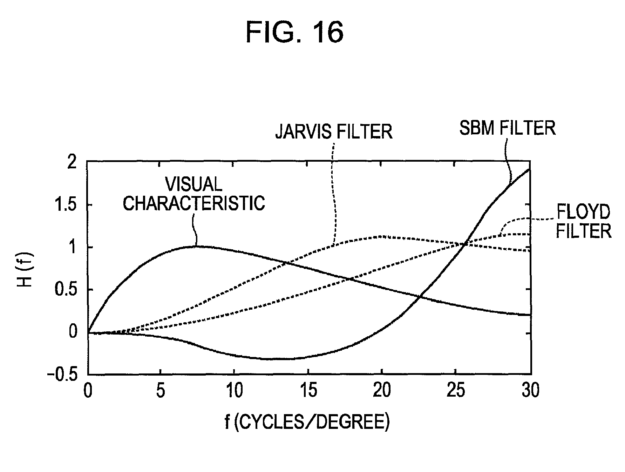

In order to suppress degradation of the perceived image quality due to noticeable noise in the gradation-converted image, the amplitude characteristic of noise shaping illustrated in Fig. 16 is necessary.

That is, Fig. 16 illustrates an example of an amplitude characteristic of noise shaping for suppressing degradation of a perceived image quality (hereinafter referred to as degradation suppressing noise shaping) due to noticeable noise in the gradation-converted image.

Here, a noise shaping filter used for $\Delta\Sigma$ modulation to realize the degradation suppressing noise shaping is also called an SBM (Super Bit Mapping) filter.

Fig. 16 illustrates the visual characteristic, the amplitude characteristic of noise shaping using the Jarvis filter, and the amplitude characteristic of noise shaping using the Floyd filter illustrated in Fig. 15, in addition to the amplitude characteristic of the degradation suppressing noise shaping (noise shaping using the SBM filter).

In the amplitude characteristic of the degradation suppressing noise shaping, the characteristic curve in a midrange and higher has an upside-down shape (including a similar shape) of the visual characteristic curve (contrast sensitivity curve). Hereinafter, such a characteristic is called a reverse characteristic.

Furthermore, in the amplitude characteristic of the degradation suppressing noise shaping, the gain increases in a high range more steeply compared to that in the amplitude characteristic of noise shaping using the Jarvis filter or the Floyd filter.

Accordingly, in the degradation suppressing noise shaping, noise (quantization error) is modulated to a higher range where visual sensitivity is lower, compared to the noise shaping using the Jarvis filter or the Floyd filter.

By adopting the SBM filter as the space-direction filter 41 (Figs. 4, 6, and 13), that is, by setting filter coefficients of the space-direction filter 41 so that the amplitude characteristic of noise shaping using the space-direction filter 41 has a reverse characteristic of the visual characteristic in the midrange and higher and that the gain increases in the high range more steeply compared to that in the amplitude characteristic of noise shaping based on $\Delta\Sigma$ modulation using the Floyd filter or the Jarvis filter, noise (quantization error) in the high range where the visual sensitivity is low is added to the pixel value IN (x, y) in the calculating unit 31 (Figs. 4, 6, and 13). As a result, noise (quantization error) in the gradation-converted image can be prevented from being noticeable.

In the amplitude characteristic of noise shaping using the SBM filter illustrated in Fig. 16, the gain is well over 1 in the high range. This means that the quantization error in the high range is amplified more significantly compared to the case where the Jarvis filter or the Floyd filter is used.

Also, in the amplitude characteristic of noise shaping using the SBM filter illustrated in Fig. 16, the gain is negative in a low range to the midrange. Accordingly, the SBM filter can be constituted by a two-dimensional filter having a small number of taps.

That is, in a case of realizing an amplitude characteristic in which the gain is 0 in the low range and midrange and the gain steeply increases only in the high range as the amplitude characteristic of noise shaping using the SBM filter, the SBM filter is a two-dimensional filter having many taps.

On the other hand, in a case of realizing an amplitude characteristic of noise shaping using the SBM filter in which the gain is negative in the low range or midrange, the SBM filter can be constituted by a two-dimensional filter having a small number of taps, for example, a 12-tap two-dimensional filter that performs filtering by using quantization errors of twelve pixels on which gradation conversion has already been performed in the raster scanning order among 5 horizontal x 5 vertical pixels with a target pixel being at the center, as described above with reference to Fig. 7. With this filter, the gain in the high range of the noise shaping can be increased more steeply compared to the case of using the Jarvis filter or the Floyd filter.

Adopting such an SBM filter as the space-direction filter 41 enables the gradation converting unit 11 to be miniaturized.

Specific examples of filter coefficients and noise shaping characteristic

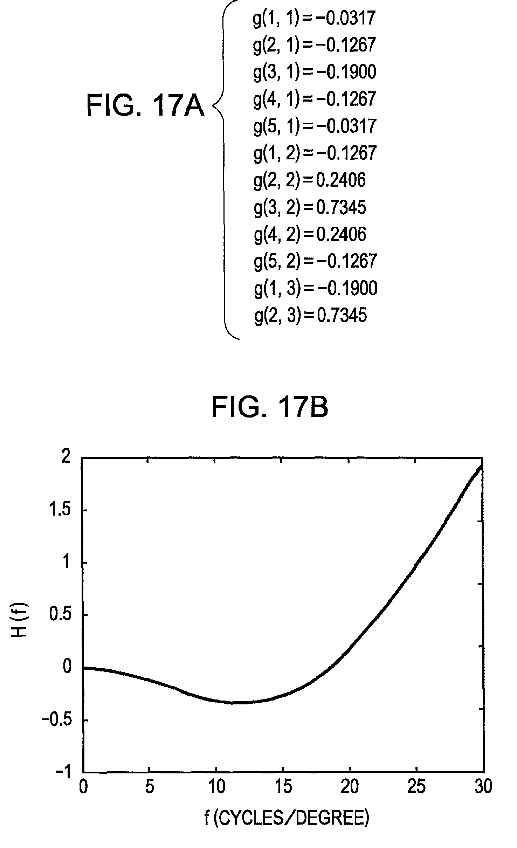

Figs. 17A and 17B illustrate a first example of filter coefficients and an amplitude characteristic of noise shaping using the SBM filter in a case where the maximum spatial frequency of the image displayed on the display 12 that displays a gradation-converted image is 30 cpd.

Specifically, Fig. 17A illustrates a first example of filter coefficients of the 12-tap SBM filter, the filter coefficients being determined so that the gain in the amplitude characteristic of noise shaping is negative in the low range or midrange and increases in the high range more steeply compared to that in the amplitude characteristic of noise shaping based on $\Delta\Sigma$ modulation using the Floyd filter.

In Fig. 17A, filter coefficients $g(1, 1) = -0.0317$, $g(2, 1) = -0.1267$, $g(3, 1) = -0.1900$, $g(4, 1) = -0.1267$, $g(5, 1) = -0.0317$, $g(1, 2) = -0.1267$, $g(2, 2) = 0.2406$, $g(3, 2) = 0.7345$, $g(4, 2) = 0.2406$, $g(5, 2) = -0.1267$, $g(1, 3) = -0.1900$, and $g(2, 3) = 0.7345$ are adopted as the filter coefficients of the 12-tap SBM filter.

Here, the SBM filter is a two-dimensional FIR filter. The filter coefficient $g(i, j)$ is a filter coefficient multiplied by a quantization error of the pixel i-th from the left and j-th from the top in 12 pixels on which gradation conversion has already been performed in the raster scanning order among 5 horizontal x 5 vertical pixels with a target pixel being at the center described above with reference to Fig. 7.

Fig. 17B illustrates an amplitude characteristic of noise shaping using the SBM filter in a case where the SBM filter has the filter coefficients illustrated in Fig. 17A.

In the amplitude characteristic of noise shaping in Fig. 17B, the gain is 0 when the frequency f is 0, the gain is negative in the low range or midrange, and the gain increases in the high range more steeply compared to that in the amplitude characteristic of noise shaping based on $\Delta\Sigma$ modulation using the Floyd filter (and the Jarvis filter).

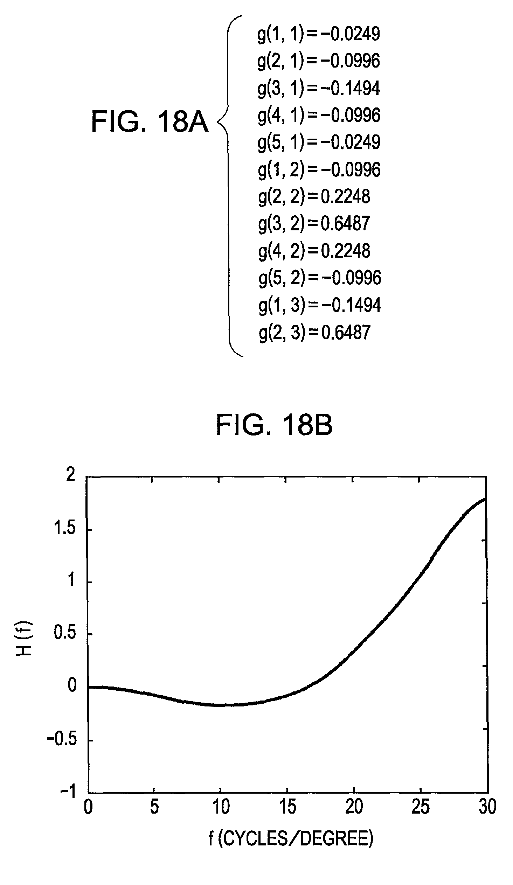

Figs. 18A and 18B illustrate a second example of filter coefficients and an amplitude characteristic of noise shaping using the SBM filter in a case where the maximum spatial frequency of the image displayed on the display 12 that displays a gradation-converted image is 30 cpd.

Specifically, Fig. 18A illustrates a second example of filter coefficients of the 12-tap SBM filter, the filter coefficients being determined so that the gain in the amplitude characteristic of noise shaping using the SBM filter is negative in the low range or midrange and increases in the high range more steeply compared to that in the amplitude characteristic of noise shaping based on $\Delta\Sigma$ modulation using the Floyd filter.

In Fig. 18A, filter coefficients $g(1, 1) = -0.0249$, $g(2, 1) = -0.0996$, $g(3, 1) = -0.1494$, $g(4, 1) = -0.0996$, $g(5, 1) = -0.0249$, $g(1, 2) = -0.0996$, $g(2, 2) = 0.2248$, $g(3, 2) = 0.6487$, $g(4, 2) = 0.2248$, $g(5, 2) = -0.0996$, $g(1, 3) = -0.1494$, and $g(2, 3) = 0.6487$ are adopted as the filter coefficients of the 12-tap SBM filter

Fig. 18B illustrates an amplitude characteristic of noise shaping using the SBM filter in a case where the SBM filter has the filter coefficients illustrated in Fig. 18A.

In the amplitude characteristic of noise shaping in Fig. 18B, the gain is 0 when the frequency f is 0, the gain is negative in the low range or midrange, and the gain increases in the high range more steeply compared to that in the amplitude characteristic of noise shaping based on $\Delta\Sigma$ modulation using the Floyd filter.

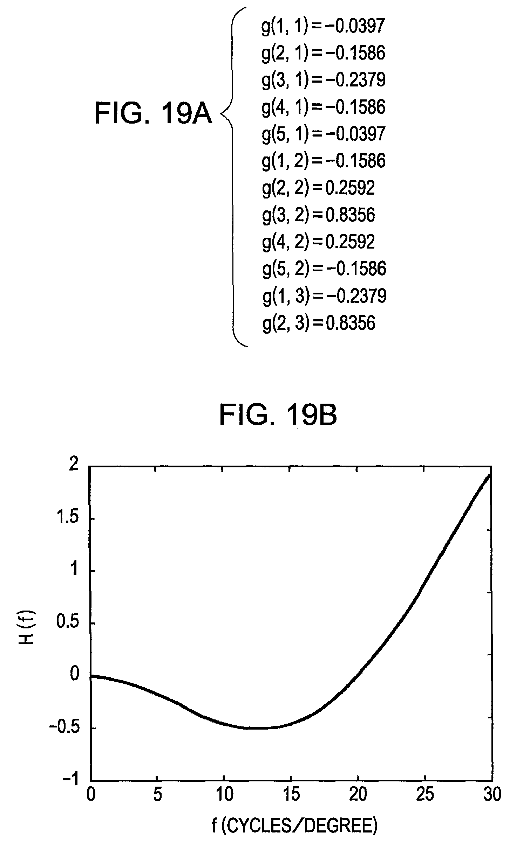

Figs. 19A and 19B illustrate a third example of filter coefficients and an amplitude characteristic of noise shaping using the SBM filter in a case where the maximum spatial frequency of the image displayed on the display 12 that displays a gradation-converted image is 30 cpd.

Specifically, Fig. 19A illustrates a third example of filter coefficients of the 12-tap SBM filter, the filter coefficients being determined so that the gain in the amplitude characteristic of noise shaping is negative in the low range or midrange and increases in the high range more steeply compared to that in the amplitude characteristic of noise shaping based on $\Delta\Sigma$ modulation using the Floyd filter.

In Fig. 19A, filter coefficients $g(1, 1) = -0.0397$, $g(2, 1) = -0.1586$, $g(3, 1) = -0.2379$, $g(4, 1) = -0.1586$, $g(5, 1) = -0.0397$, $g(1, 2) = -0.1586$, $g(2, 2) = 0.2592$, $g(3, 2) = 0.8356$, $g(4, 2) = 0.2592$, $g(5, 2) = -0.1586$, $g(1, 3) = -0.2379$, and $g(2, 3) = 0.8356$ are adopted as the filter coefficients of the 12-tap SBM filter.

Fig. 19B illustrates an amplitude characteristic of noise shaping using the SBM filter in a case where the SBM filter has the filter coefficients illustrated in Fig. 19A.

In the amplitude characteristic of noise shaping in Fig. 19B, the gain is 0 when the frequency f is 0, the gain is negative in the low range or midrange, and the gain increases in the high range more steeply compared to that in the amplitude characteristic of noise shaping based on $\Delta\Sigma$ modulation using the Floyd filter.

The filter coefficients of the 12-tap SBM filter illustrated in Figs. 17A, 18A, and 19A include negative values, and thus the gain in the amplitude characteristic of noise shaping is negative in the low range or midrange. In this way, by allowing the gain in the amplitude characteristic of noise shaping to be negative in the low range or midrange, the amplitude characteristic of noise shaping in which the gain steeply increases in the high range can be realized by an SBM filter having a small number of taps, such as 12 taps.

Additionally, according to a simulation that was performed by using SBM filters having the filter coefficients illustrated in Figs. 17A, 18A, and 19A as the space-direction filter 41, a gradation-converted image having a high perceived quality could be obtained in all of the SBM filters.

Descriptions have been given about a case where an embodiment of the present invention is applied to the image processing apparatus (Fig. 3) that performs gradation conversion to convert an 8-bit target image into a 6-bit image and that displays the 6-bit image on the display 12, which is a 6-bit LCD. However, the embodiment of the present invention can also be applied to other various cases of performing gradation conversion on an image.

For example, in a case of performing color space conversion of converting an image in which each of YUV components is 8 bits into an image having each of RGB components as a pixel value and then displaying the image that has been obtained through the color space conversion and that has RGB components as a pixel value on an 8-bit LCD, an image in which each of RGB components exceeds the original 8 bits, e.g., expanded to 16 bits, may be obtained through the color space conversion. In this case, it is necessary to perform gradation conversion on the image in which each of RGB components has been expanded to 16 bits in order to obtain an 8-bit image that can be displayed on the 8-bit LCD. The embodiment of the present invention can also be applied to such gradation conversion.

The above-described series of processes can be performed by either of hardware and software. When the series of processes are performed by software, a program constituting the software is installed to a multi-purpose computer or the like.

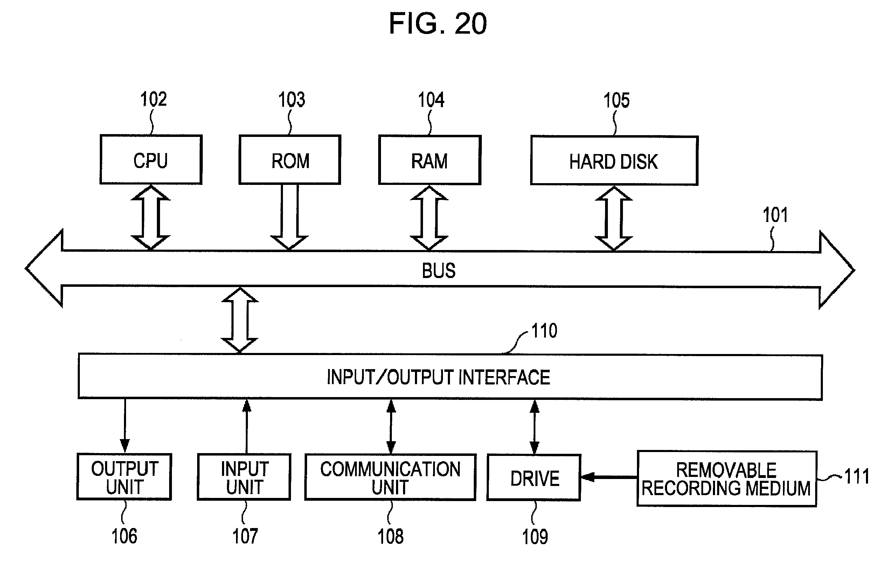

Fig. 20 illustrates an exemplary configuration of a computer to which the program for executing the above-described series of processes is installed according to an embodiment.

The program can be recorded in advance in a hard disk 105 or a ROM (Read Only Memory) 103 serving as a recording medium mounted in the computer.

Alternatively, the program can be stored (recorded) temporarily or permanently in a removable recording medium 111, such as a flexible disk, a CD-ROM (Compact Disc Read Only Memory), an MO (Magneto Optical) disc, a DVD (Digital Versatile Disc), a magnetic disk, or a semiconductor memory. The removable recording medium 111 can be provided as so-called package software.

The program can be installed to the computer via the above-described removable recording medium 111. Also, the program can be transferred to the computer from a download site via an artificial satellite for digital satellite broadcast in a wireless manner, or can be transferred to the computer via a network such as a LAN (Local Area Network) or the Internet in a wired manner. The computer can receive the program transferred in that manner by using a communication unit 108 and can install the program to the hard disk 105 mounted therein.

The computer includes a CPU (Central Processing Unit) 102. An input/output interface 110 is connected to the CPU 102 via a bus 101. When a command is input to the CPU 102 by a user operation of an input unit 107 including a keyboard, a mouse, and a microphone via the input/output interface 110, the CPU 102 executes the program stored in the ROM 103 in response to the command. Alternatively, the CPU 102 loads, to a RAM (Random Access Memory) 104, the program stored in the hard disk 105, the program transferred via a satellite or a network, received by the communication unit 108, and installed to the hard disk 105, or the program read from the removable recording medium 111 loaded into a drive 109 and installed to the hard disk 105, and executes the program. Accordingly, the CPU 102 performs the process in accordance with the above-described flowchart or the process performed by the above-described configurations illustrated in the block diagrams. Then, the CPU 102 allows an output unit 106 including an LCD (Liquid Crystal Display) and a speaker to output, allows the communication unit 108 to transmit, or allows the hard disk 105 to record a processing result via the input/output interface 110 as necessary.

In this specification, the process steps describing the program allowing the computer to execute various processes are not necessarily performed in time series along the order described in a flowchart, but may be performed in parallel or individually (e.g., a parallel process or a process by an object is acceptable).

The program may be processed by a single computer or may be processed in a distributed manner by a plurality of computers. Furthermore, the program may be executed by being transferred to a remote computer.

The present application contains subject matter related to that disclosed in Japanese Priority Patent Application JP 2008-270512 filed in the Japan Patent Office on October 21, 2008.

It should be understood by those skilled in the art that various modifications, combinations, sub-combinations and alterations may occur depending on design requirements and other factors insofar as they are within the scope of the appended claims or the equivalents thereof.

**Claims**

1. An image processing apparatus comprising:

   gradation converting means (11) for simultaneously performing space-direction $\Delta\Sigma$ modulation and time-direction $\Delta\Sigma$ modulation on an image, thereby converting a gradation level of the image.

2. The image processing apparatus according to Claim 1, wherein the gradation converting means (11) includes filtering means (34) for performing space-direction filtering and time-direction filtering on a quantization error, adding means (31) for adding a pixel value of the image and an output of the filtering means, quantizing means (32) for quantizing an output of the adding means (31) and outputting a quantized value including the quantization error, the quantized value being a result of $\Delta\Sigma$ modulation, and subtracting means (33) for calculating a difference between the output of the adding means (31) and the quantized value of the output of the adding means (31), thereby obtaining the quantization error.

3. The image processing apparatus according to Claim 2, wherein the filtering means (34) includes space-direction filter means (41) for performing the space-direction filtering on the quantization error, time-direction filter means (43) for performing the time-direction filtering on the quantization error, and weighting addition means (42,44,45) for performing weighting addition of an output of the space-direction filter means (41) and an output of the time-direction filter means (43) and outputting a weighted sum as a result of the space-direction filtering and the time-direction filtering.

**4.** The image processing apparatus according to Claim 3, further comprising:

> analyzing means (51) for analyzing the image; and
> setting means (52) for setting a weight used for the weighting addition on the basis of a result of analysis of the image.

**5.** The image processing apparatus according to Claim 3,
wherein filter coefficients of filtering performed by the space-direction filter means (41) are determined so that an amplitude characteristic of noise shaping performed based on the space-direction $\Delta\Sigma$ modulation becomes a reverse characteristic of a human visual characteristic in a midrange and higher and that a gain in the amplitude characteristic increases in a high range more steeply compared to a gain in an amplitude characteristic of noise shaping performed based on $\Delta\Sigma$ modulation using a Floyd filter.

**6.** The image processing apparatus according to Claim 3,
wherein filter coefficients of filtering performed by the space-direction filter means (41) are determined so that a gain in an amplitude characteristic of noise shaping performed based on the space-direction $\Delta\Sigma$ modulation is negative in a low range or midrange and increases in a high range more steeply compared to a gain in an amplitude characteristic of noise shaping performed based on $\Delta\Sigma$ modulation using a Floyd filter.

**7.** The image processing apparatus according to Claim 3,
wherein filter coefficients of filtering performed by the space-direction filter means (41) include a negative value and are determined so that a gain in an amplitude characteristic of noise shaping performed based on the space-direction $\Delta\Sigma$ modulation increases in a high range more steely compared to a gain in an amplitude characteristic of noise shaping performed based on $\Delta\Sigma$ modulation using a Floyd filter.

**8.** An image processing method for an image processing apparatus that performs gradation conversion on an image, the image processing method comprising the step of:

> simultaneously performing space-direction $\Delta\Sigma$ modulation and time-direction $\Delta\Sigma$ modulation on an image, thereby converting a gradation level of the image.

**9.** A program causing a computer to function as:

> gradation converting means (11) for simultaneously performing space-direction $\Delta\Sigma$ modulation and time-direction $\Delta\Sigma$ modulation on an image, thereby converting a gradation level of the image.

# FIG. 1

8 BITS  ☐                     127 = 01111111b
      127

⇩

                                              31 = 011111b
                                              32 = 100000b
6 BITS  ☐   ■   ■   ■       32 = 100000b
      31   32   32   32    32 = 100000b

TIME →

# FIG. 2

SAME PIXEL VALUE

PIXEL

FRAME

TIME

EP 2 180 688 A1

# FIG. 3

IMAGE PROCESSING APPARATUS

IMAGE
(24 BITS)

R — 8 BITS →
G — 8 BITS →
B — 8 BITS →

GRADATION
CONVERTING
UNIT
11

6 BITS →
6 BITS →
6 BITS →

DISPLAY
(18 BITS)
12

# FIG. 4

EP 2 180 688 A1

# FIG. 5

```
                    ╭──────────────────────────────╮
                    │ GRADATION CONVERTING PROCESS │
                    ╰──────────────────────────────╯
                                  │
    ┌─────────────────────────────▼──────────────┐
    │         ┌─────────────────────────┐         │
    │         │        ADDITION         │⌇S11     │
    │         └─────────────────────────┘         │
    │                      │                      │
    │         ┌────────────▼────────────┐         │
    │         │       QUANTIZATION      │⌇S12     │
    │         └─────────────────────────┘         │
    │                      │                      │
    │         ┌────────────▼────────────┐         │
    │         │     CALCULATION OF      │⌇S13     │
    │         │   QUANTIZATION ERROR    │         │
    │         └─────────────────────────┘         │
    │                      │                      │
    │         ┌────────────▼────────────┐         │
    │         │        FILTERING        │⌇S14     │
    │         └─────────────────────────┘         │
    │                      │                      │
    └──────────────────────┘
```

# FIG. 6

EP 2 180 688 A1

# FIG. 7

QUANTIZATION ERROR
USED FOR SPACE-DIRECTION
FILTERING

PRECEDING
FRAME

TARGET
FRAME

PIXEL

FRAME

QUANTIZATION ERROR
USED FOR TIME-DIRECTION
FILTERING

TARGET
PIXEL

TIME

EP 2 180 688 A1

# FIG. 8

EP 2 180 688 A1

# FIG. 9

TARGET PIXEL

PIXEL

FRAME

PIXEL REGION INFLUENCED
BY QUANTIZATION ERROR OF TARGET PIXEL

## FIG. 10A

## FIG. 10B

# FIG. 11

EP 2 180 688 A1

## FIG. 12A

MAGNITUDE

2

1

0                                                    1

NORMALIZED FREQUENCY (×π RAD/SAMPLE)

## FIG. 12B

MAGNITUDE

2

1

0                                                    1

NORMALIZED FREQUENCY (×π RAD/SAMPLE)

## FIG. 13

EP 2 180 688 A1

## FIG. 14

## FIG. 15

# FIG. 16

FIG. 17A $\left\{ \begin{array}{l} g(1,1)=-0.0317 \\ g(2,1)=-0.1267 \\ g(3,1)=-0.1900 \\ g(4,1)=-0.1267 \\ g(5,1)=-0.0317 \\ g(1,2)=-0.1267 \\ g(2,2)=0.2406 \\ g(3,2)=0.7345 \\ g(4,2)=0.2406 \\ g(5,2)=-0.1267 \\ g(1,3)=-0.1900 \\ g(2,3)=0.7345 \end{array} \right.$

## FIG. 17B

FIG. 18A
$$
\begin{cases}
g(1,\,1) = -0.0249 \\
g(2,\,1) = -0.0996 \\
g(3,\,1) = -0.1494 \\
g(4,\,1) = -0.0996 \\
g(5,\,1) = -0.0249 \\
g(1,\,2) = -0.0996 \\
g(2,\,2) = 0.2248 \\
g(3,\,2) = 0.6487 \\
g(4,\,2) = 0.2248 \\
g(5,\,2) = -0.0996 \\
g(1,\,3) = -0.1494 \\
g(2,\,3) = 0.6487
\end{cases}
$$

## FIG. 18B

FIG. 19A
$$\begin{cases} g(1, 1) = -0.0397 \\ g(2, 1) = -0.1586 \\ g(3, 1) = -0.2379 \\ g(4, 1) = -0.1586 \\ g(5, 1) = -0.0397 \\ g(1, 2) = -0.1586 \\ g(2, 2) = 0.2592 \\ g(3, 2) = 0.8356 \\ g(4, 2) = 0.2592 \\ g(5, 2) = -0.1586 \\ g(1, 3) = -0.2379 \\ g(2, 3) = 0.8356 \end{cases}$$

FIG. 19B

# FIG. 20

EP 2 180 688 A1

**EUROPEAN SEARCH REPORT**

Application Number

EP 09 17 3647

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SCHOLNIK Dan, P.: "Shared Wideband Transmit Antenna Arrays: Oprimal Pattern Synthesis and Spatio-Temporal Delta-Sigma Modulation" PhD Dissertation 2006, XP002568456 University of Maryland Retrieved from the Internet: URL:http://jocoleman.info/pubs/papers/scholnik_dissertation.pdf> [retrieved on 2010-02-08] | 1-3,8-9 | INV. H04N1/405 |
| Y | * Section 2.3: Spatial Delta-Sigma Modulation: Image Halftoning * * Chapter 4: Spatio-Temporal Delta-Sigma Modulation * * figure 2.1 * * figures 4.1, 4.9 * | 4-7 | |
| X | SCHOLNIK D P ET AL: "Joint spatial and temporal delta-sigma modulation for wideband antenna arrays and video halftoning" 2001 IEEE INTERNATIONAL CONFERENCE ON ACOUSTICS, SPEECH, AND SIGNAL PROCESSING. PROCEEDINGS. (ICASSP). SALT LAKE CITY, UT, MAY 7 - 11, 2001; [IEEE INTERNATIONAL CONFERENCE ON ACOUSTICS, SPEECH, AND SIGNAL PROCESSING (ICASSP)], NEW YORK, NY : IEEE, US, vol. 5, 7 May 2001 (2001-05-07), pages 2941-2944, XP010803568 ISBN: 978-0-7803-7041-8 | 1-3,8-9 | |
| | | | TECHNICAL FIELDS SEARCHED (IPC) |
| | | | H04N G06T |
| Y | * abstract; figure 1 * * Section 3.2: Video Halftoning * | 4-7 | |
| | -/-- | | |

The present search report has been drawn up for all claims

| Place of search | Date of completion of the search | Examiner |
|---|---|---|
| Munich | 15 February 2010 | Blaszczyk, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| Europäisches Patentamt European Patent Office Office européen des brevets | **EUROPEAN SEARCH REPORT** | Application Number EP 09 17 3647 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 550 981 A2 (GE MED SYS GLOBAL TECH CO LLC [US]) 6 July 2005 (2005-07-06) * paragraph [0020] - paragraph [0029]; figure 1 * ----- | 4 | |
| Y | DAMERA-VENKATA N ET AL: "ADAPTIVE THRESHOLD MODULATION FOR ERROR DIFFUSION HALFTONING" 1 January 2001 (2001-01-01), IEEE TRANSACTIONS ON IMAGE PROCESSING, IEEE SERVICE CENTER, PISCATAWAY, NJ, US, PAGE(S) 104 - 116 , XP000998885 ISSN: 1057-7149 * figures 1, 2 * ----- | 5-7 | |
| A | KITE T D ET AL: "DIGITAL HALFTONING AS 2-D DELTA-SIGMA MODULATION" PROCEEDINGS OF THE INTERNATIONAL CONFERENCE ON IMAGE PROCESSING. ICIP 1997. SANTA BARBARA, CA, OCT. 26 - 29, 1997; [PROCEEDINGS OF THE INTERNATIONAL CONFERENCE ON IMAGE PROCESSING], LOS ALAMITOS, CA : IEEE, US, 26 October 1997 (1997-10-26), pages 799-802, XP000792885 ISBN: 978-0-8186-8184-4 * the whole document * ----- | 1-9 | TECHNICAL FIELDS SEARCHED (IPC) |
| A | ZHAOHUI SUN: "A Method to Generate Halftone Video" 2005 IEEE INTERNATIONAL CONFERENCE ON ACOUSTICS, SPEECH, AND SIGNAL PROCESSING (IEEE CAT. NO.05CH37625) IEEE PISCATAWAY, NJ, USA, IEEE, PISCATAWAY, NJ, vol. 2, 18 March 2005 (2005-03-18), pages 565-568, XP010790702 ISBN: 978-0-7803-8874-1 * abstract; figure 1 * ----- | 1-9 | |

The present search report has been drawn up for all claims

| Place of search | Date of completion of the search | Examiner |
|---|---|---|
| Munich | 15 February 2010 | Blaszczyk, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 17 3647

This annex lists the patent family members relating to the patent documents cited in the above-mentioned European search report.
The members are as contained in the European Patent Office EDP file on
The European Patent Office is in no way liable for these particulars which are merely given for the purpose of information.

15-02-2010

| Patent document cited in search report | | Publication date | Patent family member(s) | | Publication date |
|---|---|---|---|---|---|
| EP 1550981 | A2 | 06-07-2005 | CN | 1672636 A | 28-09-2005 |
| | | | JP | 2005199061 A | 28-07-2005 |
| | | | US | 2005135698 A1 | 23-06-2005 |

EPO FORM P0459

For more details about this annex : see Official Journal of the European Patent Office, No. 12/82

EP 2 180 688 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008270512 A

**Non-patent literature cited in the description**

- **Hitoshi KIYA.** Yoku wakaru dijitaru gazou shori. CQ Publishing, Co. Ltd, January 2000, 196-213